# EUROPEAN PATENT APPLICATION

(11) **EP 4 806 601 A1**
(43) Date of publication of application: **16.09.2026**
(21) Application number: 26158948.5
(22) Date of filing: 03.03.2025
(51) Int. Cl.: B25J 11/00, B25J 13/08, B25J 19/02, B25J 19/06

(54) **A SYSTEM COMPRISING A MECHANICAL BODY WITH A FUNCTIONAL SURFACE FOR HUMAN-MACHINE INTERACTION**

(62) Document number(s) of the earlier application(s) in accordance with Art. 76 EPC: 25161210.7 / 4 803 271
(71) Applicant: HONDA MOTOR CO., LTD., Tokyo 105-8404 (JP)
(72) Inventor: Krueger, Matti Camilo, 63073 Offenbach/Main (DE); Wang, Chao, 63073 Offenbach/Main (DE); Gienger, Michael, 63073 Offenbach/Main (DE)
(74) Representative: Roth, Sebastian

(57) **Abstract**

The present disclosure relates to machines and robots and human-machine interaction. The disclosure proposes a system for human-machine interaction. The system comprises a mechanical body, a functional surface provided on the mechanical body, one or more sensors configured to sense an environment of the mechanical body and to detect an object of interest in the environment, and a processor. The processor is configured to control the functional surface based on a sensor output of the one or more sensors. The functional surface is configured to generate at least one sensory projection associated with the object of interest in response to being controlled by the processor based on the sensor output. The at least one sensory projection is generated on or by one or more parts of the functional surface provided on respective one or more parts of the mechanical body that relate to the object of interest.

## Description

### TECHNICAL FIELD

The present disclosure relates to machines, especially robots, and to human-machine interaction. The disclosure proposes a system for human-machine interaction, the system including a mechanical body provided with a functional surface. The functional surface is designed to facilitate the human-machine interaction by having expressive capabilities.

### BACKGROUND

Machines and specifically robots are increasingly integrated into diverse environments, ranging from industrial automation and logistics, to healthcare and personal assistance. As the machines become more complex and autonomous, their ability to interact seamlessly with humans depends not only on their functional capabilities, but also on their capacity to transparently communicate their actions, intentions, and areas of focus.

In human-machine interaction, however, understanding a machine's focus of attention and intended actions is nowadays often challenging, due to the limitations of the machine in communication bandwidth and expressiveness. For example, conventional communication methods, such as natural language, are inherently sequential and may not effectively convey multiple concurrent processes performed by or within the machine.

This challenge becomes even more pronounced when different parts of the machine operate simultaneously on multiple objects or interact with multiple users, sometimes in a partially independent manner. For example, a robot may be grasping one object, while visually tracking another object, for example, its next target or a related object. In this scenario, conventional communication methods may struggle to provide an observer or user of the robot with an immediate and intuitive understanding of the robot's multiple loci of attention and action.

### SUMMARY

In view of the above, this disclosure aims to enhance the ability of a machine to quickly and dynamically convey its focus and/or intentions. For example, an objective is to improve the understanding of various parts of the machine, even if these parts interact with multiple objects or users simultaneously. Another objective is to enable the machine to convey other cognitive processes and states, such as perception, interpretation, or predictions. To achieve this, an objective is to enable a mechanical body of a machine to provide more parallelized visual and multimodal expression information to a user.

These and other objectives are achieved by the solutions of this disclosure, which are described in the independent claims. Advantageous implementations are described in the dependent claims.

A first aspect of this disclosure provides a system for human-machine interaction, the system comprising: a mechanical body; a functional surface provided on the mechanical body; one or more sensors configured to sense an environment of the mechanical body and to detect an object of interest in the environment; a processor configured to control the functional surface based on a sensor output of the one or more sensors; wherein the functional surface is configured to generate at least one sensory projection associated with the object of interest in response to being controlled by the processor based on the sensor output; and wherein the at least one sensory projection is generated on or by one or more parts of the functional surface provided on respective one or more parts of the mechanical body that relate to the object of interest.

The system of the first aspect may be a machine or robot. However, the system of the first aspect could also be used to control the mechanical body being part of a machine or robot. Further, the mechanical body of the system may be attachable to a human, for instance, it may be an exoskeleton, or an arm-like structure, or a similar wearable. The mechanical body may be just a support structure for the functional surface. In such cases, the system of the first aspect may be worn by the human like, a functional skin. The one or more sensor could include biosensors.

The functional surface provided on the mechanical body, when controlled by the processor according to the sensor measurements, has expressive capabilities, since it can generate the one or more sensory projections. This facilitates the human-machine interaction between an observer and the mechanical body. The actions and/or intentions and/or focus of the mechanical body are easier observable and predictable by the observer, who perceives the sensory projection(s) relating to the object of interest.

The system of the first aspect thus enhances the ability of a machine, which comprises the mechanical body with the functional surface, to quickly and dynamically convey its focus and/or intentions. In particular, the understanding of the focus and/or intentions of specifically various different parts of the mechanical body may become easier, even if the mechanical body interacts with multiple objects or users simultaneously. The functional surface provides the mechanical body with more parallelized visual and multimodal expression capabilities. Notably, if the mechanical body interacts with more than one object of interest, for instance, simultaneously, the functional surface may be configured to generate at least one sensory projection for each object of interest, particularly at the respective parts of the mechanical body interacting with the respective object of interest.

In an implementation, the mechanical body is a robotic body; and the functional surface comprises a skin-liked device attached to the robotic body.

Thus, the system can be a robot, or can be used to control a robot. The skin-like device may be fixed to the mechanical structure of the robotic body, or may be removable and (re)attachable. The skin-like device may be a thin and/or flexible sheet device, which may conform to the shape of the mechanical structure.

In an implementation, the one or more parts of the mechanical body, which relate to the object of interest, comprise a part closest to the object of interest.

This facilitates understanding of which object is currently in the system's focus.

In an implementation, the one or more parts of the mechanical body, which relate to the object of interest, comprise a part interacting with or intended to interact with the object of interest.

This facilitates understanding of which part of the mechanical body is currently interacting with or will shortly interact with the object of interest.

In an implementation, the one or more parts of the mechanical body, which relate to the object of interest, comprise a part that is oriented such that it is visible from a predetermined viewing direction.

The predetermined viewing direction may be the direction an observer, e.g. user, views the mechanical body. Therefore, this facilitates the understanding of the actions and/or intentions and/or focus of the mechanical body for the observer.

In an implementation, the at least one sensory projection comprises an image of the object of interest or an image computed by the processor based on the object of interest; and the functional surface is configured to display the image.

The computed image could be an abstracted image of the object, e.g. only a shape of the object or a symbols indicating the object. The computed image could also be one or more rendered images representing the object, for example, multi-perspective renderings. The functional surface could be an ultra-thin display device, for instance, it could be a thin-film display device.

In an implementation, the image computed by the processor based on the object of interest comprises a non-visible and/or hidden feature of the object of interest. Thus, the functional surface may be used to provide an "x-ray" function, which may provide more information about the non-visible feature(s) of the object of interest.

In an implementation, the object of interest is obscured from a predetermined viewing direction by the mechanical body.

Thus, the functional surface may be used to provide a "window" function, allowing an observer to see the object blocked by normal view.

In an implementation, the at least one sensory projection associated with the object of interest comprises at least one of: a locally modified surface structure of the functional surface; a locally modified surface temperature of the functional surface; a sound produced by the one or more parts of the functional surface; a smell produced by the one or more parts of the functional surface.

One or more of those and other sensory projections may be combined and/or generated simultaneously. Thus, a "multimodal" sensory projection is enabled by the functional surface controlled by the processor.

In an implementation, the functional surface is configured to, in response to being controlled by the processor based on the sensor output, generate the at least one sensory projection such that it transitions at least once from one part of the one or more parts of the mechanical body, which relate to the object of interest, to another part.

The sensory projection may transition more than once, i.e. multiple times, between at least two, potentially more, parts of the mechanical body. The transition may provide the sense of movement, or hopping, or skipping, or rotating, or the like, or combinations, of the at least one sensory projection.

In an implementation, the processor is configured to control the functional surface to generate the transitioning of the at least one sensory projection based on an action and/or movement or based on an intended action and/or movement of the mechanical body.

This facilitates understanding of the actions and/or movements of the mechanical body, which are performed now or will be performed in the near future.

In an implementation, the functional surface is configured to, in response to being controlled by the processor based on the sensor output, expand the at least one sensory projection, and/or magnify the at least one sensory projection, and/or modify a type of the at least one sensory projection.

For instance, a sensory projection can be expanded from one part of the mechanical body to another, or can be magnified e.g. with the mechanical body approaching the object of interest, or can be changed from, for instance, a visual projection to a structural or audio projection, or vice versa. A type of the sensory projection may accordingly be "visual" or "structural" or "auditory".

In an implementation, the processor is configured to, based on the sensor output and an intended action or movement of the mechanical body, compute a prediction of the at least one sensory projection associated with the object of interest for a future time point; and the functional surface is configured to, in response to being controlled by the processor based on the sensor output, generate the prediction of the at least on sensory projection.

This facilitates understanding of future actions and/or intentions of the mechanical body.

In an implementation, the functional surface is further configured to, in response to being controlled by the processor, generate at least one human-machine interface, for instance, a surface area of the functional surface that is sensitive to a touch or gesture of a user.

This facilitates direct interaction of the user with the mechanical body.

In an implementation, the functional surface is configured to receive a user input via the generated human-machine interface, and to provide a corresponding feedback signal to the processor.

The processor may then be configured to control the mechanical body and/or the functional surface based on the feedback signal, i.e., according to the user input.

In an implementation, the functional surface is further configured to, in response to being controlled by the processor based on the sensor output, generate one or more supplementary projections for guiding user attention to the at least one sensory projection associated with the object of interest.

This can further support the understanding of the mechanical body's actions, and/or intentions, and/or focus.

A second aspect of this disclosure provides a method for human-machine interaction, the method comprising: using one or more sensors to sense an environment of a mechanical body and to detect an object of interest in the environment; controlling a functional surface provided on the mechanical body based on sensor output of the one or more sensors; wherein the functional surface generates at least one sensory projection associated with the object of interest in response to the controlling; and wherein the at least one sensory projection is generated on or by one or more parts of the functional surface provided on respective one or more parts of the mechanical body that relate to the object of interest.

The method of the second aspect may have implementations that correspond to the implementations of the system of the first aspect. The method of the second aspect and its implementations achieve the effects and advantages described above for the system of the first aspect and its corresponding implementations.

A third aspect of this disclosure provides a computer program comprising instructions which, when the computer program is executed by a processor, causes the processor to perform the method of the second aspect or any implementation thereof.

The processor may be the processor of the system of the first aspect, or of a machine, especially of a robot.

A fourth aspect of this disclosure provides a robot comprising: the system according to the first aspect or any implementation thereof; wherein the mechanical body is a robotic body of the robot; wherein the functional surface of the system is provided on the robotic body; and wherein the processor and/or at least one sensor is integrated with the robotic body.

In summary of the above aspects and implementations, the functional surface provided on the mechanical body, which may be a skin-like device or functional skin, introduces a concept of sensory projection(s) on parts of the mechanical body, for instance, a robotic body of a robot. For example, the functional surface may be a (flexible) on-body display. Parts of the mechanical body, which are covered by the functional surface, may selectively "reflect" or "project" objects and/or elements of particular interest in the scene, i.e., in the environment of the mechanical body. The reasons for selecting a part of the mechanical body to generate at least one sensory projection at a particular location (e.g., a particular part of the surface area of the functional surface) can be diverse, and may yield different advantages in interaction, as will become clear from the later description.

For example, a "reflection" (e.g., an image) of the object of interest may be generated, by the functional surface, on the part of the mechanical body that is closest to the object of interest. As another example, a part of the mechanical body, which is relevant for a potential interaction with the object of interest, may be used as location for generating the sensory projection (e.g., an image of a grasping target shown on the hand of a robot). As another example, showing an image of the object of interest at the part of the mechanical body, which is presently in the field of view of an observer, e.g., a user of the system, is possible.

### BRIEF DESCRIPTION OF THE DRAWINGS

The above described aspects and implementations are explained in the following description of embodiments with respect to the enclosed drawings:
- FIG. 1: shows an exemplary embodiment of a system according to this disclosure.
- FIG. 2: illustrates various exemplary ways of generating a sensory projection on a mechanical body according to this disclosure.
- FIG. 3: shows a flow-diagram of a method according to this disclosure.
- FIG. 4: shows a flow-diagram of an exemplary implementation of the method according to this disclosure.

### DETAILED DESCRIPTION OF EMBODIMENTS

Illustrative examples of the system and method according to this disclosure are described in the following, with reference to the above-mentioned figures. Although this description provides detailed examples and implementations, it should be noted that those details are intended to be exemplary and should not be construed to limit the scope of the disclosure.

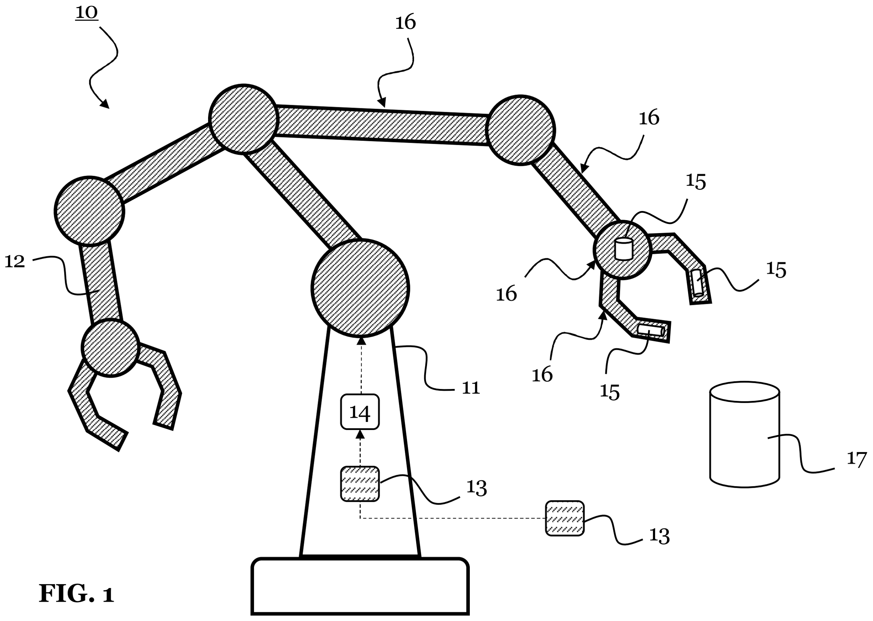

FIG. 1 shows a system 10 according to this disclosure. The system 10 is for facilitating human-machine interaction, and can accordingly be used for a machine or can be a machine itself. The system 10 comprises a mechanical body 11, which is at least suitable for a machine or is of a machine. The machine may, for instance, be robot. The robot may be, for instance, a humanoid robot, or an industrial robot (e.g., for assembling) products on a production line), and/or may comprise robotic arms sorting (e.g., for sorting items in a warehouse). The machine may also be an autonomous vehicle navigating a dynamic environment, or may be an assistive system or device (e.g., aiding in a healthcare setting), or may be an agricultural drone (e.g., for monitoring and harvesting crops), or a similar autonomous agent. The system 10 may also be a wearable device, for instance, an exoskeleton or the like that can be attached to a human. The functional surface may in this way act as a functional skin on the human. Such machines typically rely on sensor inputs to perceive their surrounding environment, and make decisions about how to interact with objects in the environment.

In this regard, the system 10 further comprises one or more sensors 13 configured to sense an environment of the mechanical body 11, and to detect an object 17 of interest in the environment. The one or more sensors 13 may comprise any one or combination of a camera for visual perception, LiDAR for depth mapping and obstacle detection, a tactile sensor for pressure and touch feedback, an ultrasonic sensor for distance measurement, an infrared sensors for heat detection, and a force-torque sensor for measuring interaction forces in machine parts.

The object 17 of interest may refer to any element or entity within the environment of the mechanical body 11, which can be detected, and/or tracked, and/or interacted with. The object 17 of interest may be a single, distinct item (e.g., a tool, a product, or an obstacle, or the like), or may be a composite structure including multiple parts (e.g., an assembly of components, a human mechanical body with articulated limbs, or a cluster of objects in a shared context). The object 17 of interest may comprise dynamic and static entities, including moving objects (e.g., a passing vehicle or a person, or components on a delivery band), and stationary ones (e.g., a designated workspace or storage bin).

The system 10 also comprises a functional surface 12 provided on the mechanical body 11. The functional surface 12 may be part of the mechanical body 11, or may be covering at least parts of the mechanical body 11. The functional surface 12 may be a sheet device or skin-like device, which is attached to or attachable to the mechanical body 11, for example, to a robotic body of a robot. The functional surface 12 may be a thin and/or flexible electronic component or device. For instance, it may be made of a soft and/or stretchable material, which can adjust to the mechanical body 11 and/or which can integrate at least one of a sensor 13, a circuit, or a display, or other electronic component. The functional surface 12 may be designed for conforming to surfaces such as parts of the mechanical body 11, which may have different shapes and sizes. As an example, the functional surface 12 may be an ultra-thin, and/or flexible, and/or stretchable electronic device that is able to mimic properties of human skin. For instance, it may adhere seamlessly to the mechanical body 11, for example, a robotic body.

The system 10 further comprises a processor 14 configured to control the functional surface 12 based on a sensor output of the one or more sensors 13. This may mean that the processor 14 is capable of analyzing real-time data provided by the one or more sensors 13 as the sensor output, and of adjusting the behavior of the functional surface 12 accordingly. The functional surface 12 may be able to implement various sensory functions, as described later, which the control of the processor 14 can cause. The processor 14 can cause this in dependence of the measurement results of the one or more sensors 13.

Sensor output may refer to data or one or more signals produced by the one or more sensors 13 in response to detecting physical stimuli from the sensed environment. This output can represent various sensory modalities, such as visual (e.g., camera feed), auditory (e.g., microphone signal), or tactile (e.g., pressure sensor reading), and may be further processed or interpreted by the processor 14.

The processor 14 may comprise processing circuitry to perform, conduct or initiate various operations described in the following. For instance, such processing circuitry may comprise hardware and/or may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. Further, the system 10 may comprise memory or memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations described above to be performed.

In response to being controlled by the processor 14 based on the sensor output, the functional surface 12 is particularly configured to generate at least one sensory projection 15 associated with the object 17 of interest. The at least one sensory projection 15 is generated on or by one or more parts 16 (e.g., surface areas) of the functional surface 12, which are provided on (e.g. attached to or covering) respective one or more parts 16 of the mechanical body 11, the one or more parts 16 relating to the object 17 of interest. The object 17 of interest may relate to a specific part 16 of the mechanical body 11 (and vice versa), for example, by at least one of context, and proximity, and probability, and visibility, as will be explained in more detail below.

The sensory projection 15, which is generated by the functional surface 12 and is associated with the object of interest 17 detected by the one or more sensors 13 in the environment, may refer to a perceptible representation (e.g., visual, or auditory, or haptic, or the like) of the object 17 of interests. The sensory projection 15 is produced based on the sensor data. The sensory projection 15 can take various forms, such as an image displayed on a part of the surface of the functional surface 12, a sound produced by a part of the functional surface 12, a surface structure of the functional surface 12, or a haptic feedback signal. The sensory projection 15 provides a perception or an interpreted perception of the detected object 17 to an observer of the mechanical body 11, for example.

Particular examples of the at least one sensory projection 15 associated with the object 17 are: an displayed image of the object of interest, or a displayed image computed by the processor 14 based on the object 17; a locally modified surface structure of the functional surface 12, a locally modified surface temperature of the functional surface 12, a sound produced by the one or more parts of the functional surface 12, and a smell produced by the one or more parts of the functional surface 12. Any one or a combination of those may be generated by the functional surface.

Notably, some parts of the system 10 may be attached to or integrated with the mechanical body 11. For instance, the functional surface 12 may be attached to parts of the mechanical body 11, for example, may be wrapped around and/or cover the parts of the mechanical 11 (as indicated by the hatched portions in FIG. 1). The functional surface 12 may be removed from the mechanical body 11. It is also possible, however, that the surface of the mechanical body 11 is the functional surface 12, i.e., that mechanical body 11 and functional surface 12 are integral.

Further, for example, the one or more sensors 13 may be integrated with the mechanical body 11 and/or may be positioned in the surroundings (environment) of the mechanical body 11. The one or more sensors 13 may also comprise sensors that are part of a machine comprising the mechanical body 11. The processor 14 may be integrated with the mechanical body 11, e.g., as an internal controller. The processor 14 may also be an external controller, which may provide control signals (wired or wireless) to the functional surface 12. The processor 14 may receive sensor data (the sensor output) from the one or more sensors 13 via suitable communication means (wired or wireless).

In FIG. 1, the mechanical body 11 is exemplarily shown as that of an industrial robot with arms, which is able to handle objects 17. However, this is just for illustrational purposes, and not limiting to this disclosure.

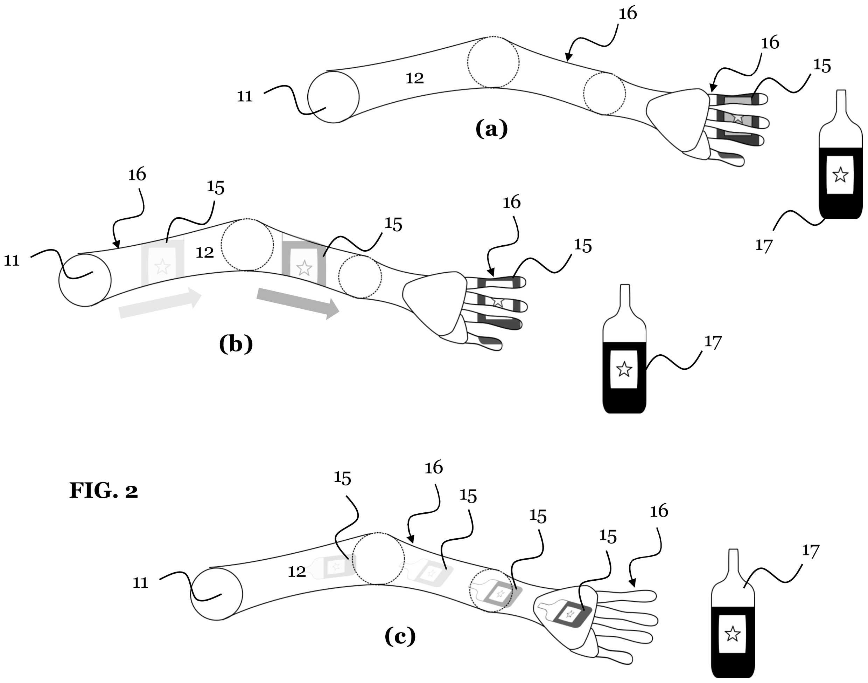

FIG. 2 illustrates various exemplary ways of generating the sensory projection 15 in a system 10 according to this disclosure. As shown in FIG. 2, the mechanical body 11 in this case comprises a robot arm, which may be part of a larger robotic body, for instance, of a humanoid robot.

FIG. 2 illustrates the sensory projection 15 as being of the visual type, i.e., image-based. This type of sensory projection 15 shown in FIG. 2 may also be referred to as a "reflection", which is generated by the functional surface provided on the robotic arm. Different exemplary forms of such a "reflection" are depicted.

FIG. 2(a) shows such a sensory projection 15 ("reflection") generated on the surface of the closest interface of the mechanical body 11 that communicates with the interaction target, i.e., the object 17 of interest. In this case, the sensory projection 15 is produced on the "skin" of the robot hand of the robotic arm, which intends to interact with the object 17, e.g., grab the object 17. In this case, the sensory projection 15 comprises an image related to the object 17 of interest, the image being generated on the part 16 of the mechanical body 11 closest to the object 17 of interest and/or intended to interact with the object 17 of interest.

FIG. 2(b) shows that the sensory projection 15 can also be produced such that it seems to move (e.g., from eyes to hand of the robot), for instance, as the role of the object 17 switches from "attention" to "grasp" interaction with the mechanical body 11. That is, if the robot first focuses its attention on the object 17, to then proceed with grabbing it, the sensory projection(s) on the functional surface 12 may accordingly change. For instance, the functional surface 12 can be configured to, in response to being controlled by the processor 14 based on the sensor output of the one or more sensors 13, generate the at least one sensory projection 15 such that it transitions (e.g. moves, or skips, or the like) from one part 16 of the mechanical body 11, which relates to the object 17 of interest, to another part 16.

FIG. 2(c) shows that also a re-scaling, or rotation, or distortion, or other manipulation or combinations thereof, of/to the sensory projection 15 is possible, in order to aid target recognition. For example, the functional surface 12 may be configured to, in response to being controlled by the processor 14 based on the sensor output, expand the at least one sensory projection 15 and/or magnify the at least one sensory projection 15, and/or modify a type of the at least one sensory projection 15.

Of course there are other possibilities for generating the sensory projection 15. For instance, the functional surface 12 may deform (or seem to deform) at a place touched by a person, for instance, to mimic some properties of an object 17 of interest in terms of color, shape, and feel. In another example, the robot hand, through which the robot intends to interact with the object 17, may either repeat a sound generated by that object 17 or may produce a sound that is (optionally) indicative of that object class.

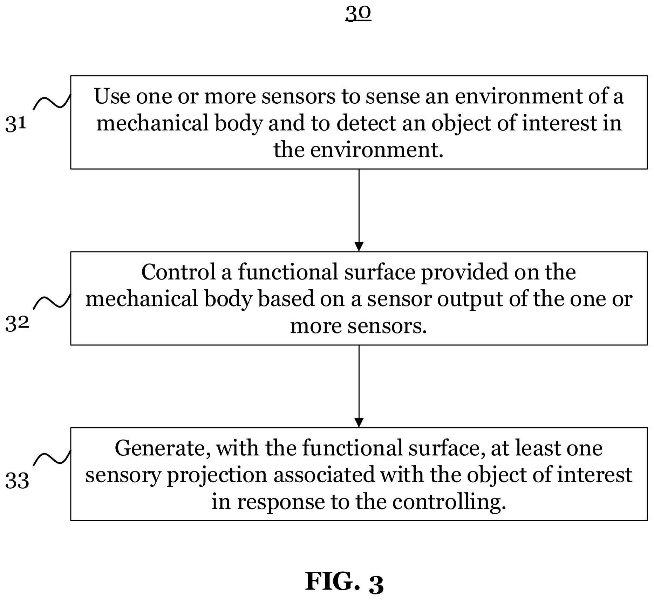

FIG. 3 shows a flow-diagram of a general method 30 for human-machine interaction, according to this disclosure. The method 30 may be performed by the system 10 of or for a machine, e.g. robot, comprising the system 10.

The method 30 comprises a step 31 of using one or more sensors 13 to sense an environment of a mechanical body 11, and to detect an object 17 of interest in the environment of the mechanical body 11. The method 30 further comprises a step 32 of controlling a functional surface, which is provided on the mechanical body 11, based on a sensor output of the one or more sensors 13. The method 30 further comprises a step 33 of the functional surface 12 generating at least one sensory projection 15 associated with the object 17 of interest in response to the controlling step 32. The at least one sensory projection 15 is generated on or by one or more parts of the functional surface 12 provided on respective one or more parts 16 of the mechanical body 11 that relate to the object 17 of interest.

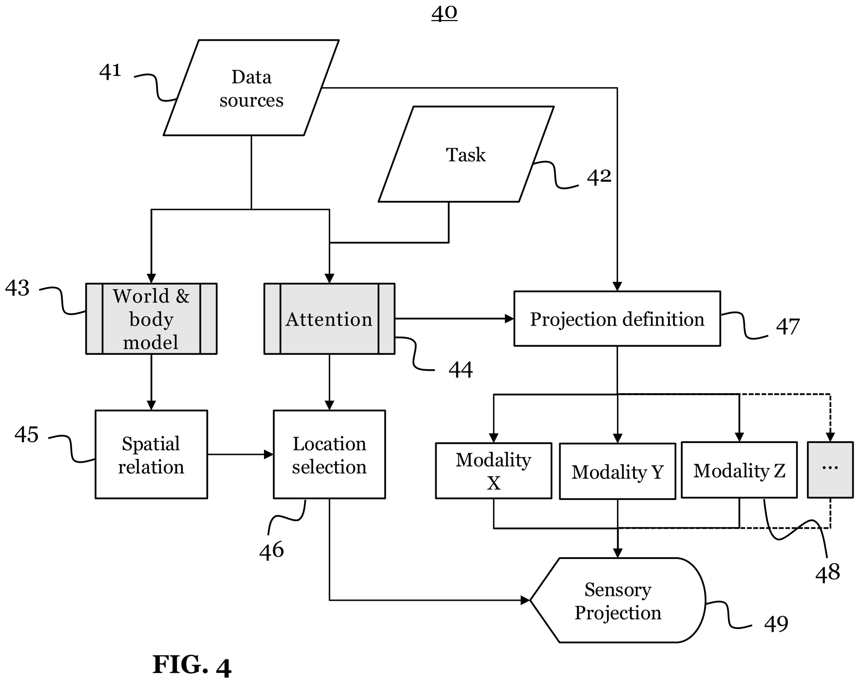

FIG. 4 shows a flow-diagram of an exemplary implementation procedure 40 for the method 30 according to this disclosure.

At block 41, the one or more sensors 13 (being data sources, e.g., cameras, or microphones, or pressure sensors) provide data to the processor 14. The processor 14 may then create (at block 43) a self and world model of the mechanical body 11 and the environment of the mechanical body 11, based on the sensor data. Further, based further on a task and/or goal provided (block 42) as an input to the processor 14, the processor 14 may drive attention (at block 44) on specific parts of the input data. The self and world model may be used by the processor 14 to determine (at block 45) spatial relations between parts 16 of the mechanical body 11 and incoming data for potential mapping to specific parts 16 of the mechanical body 11. The output of the attention module is used for both the selection of data, which is considered to define the sensory projection 15 to be generated (at block 47), as well as the location on the functional surface 12 where the sensory projection 15 is to be generated (at block 46). In addition to the input from the attention module, the definition of the sensory projection 15 (at block 47) may also be driven by the current task, and may involve multiple modalities (block 48), through which it is then generated (at block 49).

In summary of the above exemplary embodiments of this disclosure, one key idea lies in the dynamic (and optionally multimodal) "display" (e.g., including appearance, shape, surface structure, sound, temperature, smell, etc.) of one or more sensory projections 15 - functioning as references to the object 17 of interest - directly on the surface areas of the mechanical body 11, which relate to the respective object 17 of interest in an interaction. In this way, for example, an observer and/or interaction partner can more quickly and easily understand the mechanical body's one or multiple loci of focus, as well as its relation to the interaction.

The term sensory projection 15 is used to describe, generally, the re-creation of one or more features that are indicative of the object 17 of interest, including also transformed and abstracted forms, as well as visual and non-visual features. The sensory projection 15 may be generated (close to) in place of the current, past, or upcoming (contextual) machine interface with the object 17.

As an alternative or a complement to these indicative features, window-like properties (e.g., revealing hidden features of the object 17 of interest or behind the object 17 of interest regarding a certain viewing direction) may be used as a sensory projection 15, to facilitate user understanding of contextually relevant but obstructed features or elements as well. The window-like projection may be related to covered features of the object 17 of interest, and may be shown (close to) in place of the current, past, or upcoming (contextual) machine interface with the object. 17. For example, this may show (assumed) hidden internal features of the object 17 of interest ("x-ray"), and/or may show a perspective adaptation to facilitate perception of objects 17 that are just difficult to perceive from specific perspectives, and/or may be used to reduce blocking of the view by the mechanical body 11 ("invisibility cloak").

The "display" of the at least one sensory projection 15 may change dynamically, for example, in interaction, and may be adapted in response to specific user actions, which the mechanical body 11 may demonstrate on itself when suitable means of manipulation are available. For example, the functional surface 12 may be configured to mimic a change of skin representations in response to user actions. For example, the skin may mimic and serve as a manual input device for adaptations (e.g., smartphone-like gestures on skin or in the air for zooming etc.), and/or may adapt to various user action types (touch, gestures, eye-fixations), e.g., option to highlight features focused by the user, and/or may implement observable robot self-manipulation for teaching (robot as user of its own features).

In the following, some further possible implementations, which may be combined individually or in combination with the above presented embodiments, are explained.

In one implementation, the functional surface 12 may display additional (guiding) features on less relevant machine parts, which may help guide the attention to the relevant parts with the more prominent sensory projection 15. The functional surface 12 may be configured to generate one or more supplementary projections for guiding the user attention to the at least one sensory projection 15 associated with the object 17 of interest. This may be done on-demand (e.g., when detecting a lack of user understanding/user focusing on irrelevant mechanical body parts).

In another implementation, the sensory projection 15 may move or be copied from one part of the mechanical body 11 to the other, as the object's 17 role, with which the sensory projection 15 is associated, changes, e.g., from monitoring to grasping by the mechanical body 11.

In another implementation, the sensory projection 15 may be expanded beyond the borders of the relevant machine part 16, to increase room/visibility

In another implementation, the features of the sensory projection 15, such as size and opacity, may be varied when needed, e.g., depending on application context and target audience distance. For example, a larger projection with higher contrast for a more distant observer, or when the observer shows signs of uncertainty.

In another implementation, individual projections 15 may be created, which are most suitable for each observer's perspective, required level of detail, or role in the interaction (e.g., through 3D and/or multi-perspective displays or augmented reality (AR) screens).

In another implementation, sensory projections may be generated based on predictions about the future state of the reflected object 17, the predictions being, for instance, indicative of intended goals and/or next steps. For example, the processor 14 can compute a prediction of the at least one sensory projection 15 associated with the object 17 of interest for a future time point, and the functional surface can generate the computed prediction.

In another implementation, sensory projections can be used to show alternative perspectives on the object 17 of interest, which may not be accessible to a user otherwise given present configurations.

In another implementation, irrelevant surface areas may be made "invisible" or less salient by rendering the background (from the perspective of the observer).

In another implementation, "x-ray" actions may be implemented. For example, if a hand of the robot moves in front of a container, the sensory projection 15 may reveal its (assumed) contents. This could also be implemented on a screen held by the machine, and does not have to be a part 16 of the mechanical body 11.

In another implementation, a telescope action may be implemented, wherein the sensory projection 15 is magnified.

In another implementation, the sensory projection 15 may resemble "windows" instead of "mirrors" (e.g., projections on the back of a robot head to reveal what (which object 17 of interest) is on the "robot's mind").

In another implementation, the temporal congruency between sensory projections 15, other expressive capabilities, and reality may be varied as an additional dimension of expression, e.g., to implicitly indicate anticipation (e.g., reflection before motion) vs. surprise (e.g., motion before reflection).

In another implementation, multi-modality sensory projections 15 may be used, for example:
- Temperature, friction, shape (e.g., for physical teaching scenarios, showing joint limits or other (non-intuitive) constraints).
- Warm up on touch and/or become hot when should not be touched etc.
- Sound, e.g., proximity modulation of frequency, use of mid-air haptics.
- Skin as input surface (full mechanical body tactile/multimodal interface).
- Overt self-manipulation; e.g., a robot shows how to perform its own adaptations (e.g., by touching its own arm and visualizing the effect)

The above-described solutions of this disclosure can be used in human-machine or specifically human-robot interaction, in order to improve system comprehensibility and the interaction flow. Through the sensory projections 15 related to attention/intention targets (object 17 of interest), unwanted actions, e.g., machine errors, may be recognized and corrected early by an observer. The communication can further be simplified through multi-modal referencing (e.g., less explicit language required when spatial references can be made visually.)

In the claims as well as in the description of this disclosure, the word "comprising" does not exclude other elements or steps and the indefinite article "a" or "an" does not exclude a plurality. A single element may fulfill the functions of several entities or items recited in the claims. The mere fact that certain measures are recited in the mutual different dependent claims does not indicate that a combination of these measures cannot be used in an advantageous implementation.

## Claims

1. A system (10) for human-machine interaction, the system (10) comprising:
a robotic body (11);
a functional skin-like device (12) attached to the robotic body (11);
one or more sensors (13) configured to sense an environment of the robotic body (11) and to detect an object (17) of interest, with which the robotic body (11) interacts or intends to interact, in the environment of the system (10);
a processor (14) configured to control the skin-like device (12) based on a sensor output of the one or more sensors (13);
wherein the skin-like device (12) is configured to generate at least one sensory projection (15) associated with the object (17) of interest in response to being controlled by the processor (14) based on the sensor output; and
wherein the at least one sensory projection (15) is generated on or by one or more parts of the skin-like device (12) attached to respective one or more parts (16) of the robotic body (11) that interact with or are intended to interact with the object (17) of interest.

2. The system (10) according to claim 1, wherein the at least one sensory projection (15) associated with the object (17) of interest comprises
a locally modified surface structure of the skin-like device (12).

3. The system (10) according to claim 1 or 2, wherein the at least one sensory projection (15) associated with the object (17) of interest comprises
a locally modified surface temperature of the skin-like device (12).

4. The system (10) according to one of the claim 1 to 3, wherein the at least one sensory projection (15) associated with the object (17) of interest comprises
a sound produced by the one or more parts of the skin-like device (12).

5. The system (10) according to one of the claims 1 to 4, wherein the at least one sensory projection (15) associated with the object (17) of interest comprises
a smell produced by the one or more parts of the skin-like device (12).

6. The system (10) according to one of the claims 1 to 5, wherein
the at least one sensory projection (15) comprises an image of the object (17) of interest or an image computed by the processor (14) based on the object (17) of interest; and
the skin-like device (12) is configured to display the image.

7. The system (10) according to claim 6, wherein
the image computed by the processor (14) based on the object (17) of interest comprises a hidden feature of the object (17) of interest.

8. The system (10) according to one of the claims 1 to 7, wherein
the skin-like device (12) is configured to, in response to being controlled by the processor (14) based on the sensor output, generate the at least one sensory projection (15) such that the at least one sensory projection (15) transitions at least once from one part (16) of the one or more parts (16) of the robotic body (11) to another part (16) of the one or more parts (16).

9. The system (10) according to claim 8, wherein
the processor (14) is configured to control the skin-like device (12) to generate the transitioning of the at least one sensory projection (15) based on a movement or based on an intended movement of the robotic body (11).

10. The system (10) according to claim 1 or 9, wherein
the skin-like device (12) is configured to, in response to being controlled by the processor (14) based on the sensor output, expand the at least one sensory projection (15), and/or magnify the at least one sensory projection (15), and/or modify a type of the at least one sensory projection (15).

11. The system (10) according to one of the claims 1 to 10, wherein
the processor (14) is configured to, based on the sensor output and an intended movement of the robotic body (11), compute a prediction of the at least one sensory projection (15) associated with the object (17) of interest for a future time point; and
the skin-like device (12) is configured to, in response to being controlled by the processor (14) based on the sensor output, generate the prediction of the at least on sensory projection (15).

12. The system (10) according to one of the claims 1 to 11, wherein
the skin-like device (12) is further configured to, in response to being controlled by the processor (14), generate at least one human-machine interface, for instance, a surface area of the skin-like device (12) that is sensitive to a touch or gesture of a user.

13. The system (10) according to one of the claims 1 to 12, wherein
the skin-like device (12) is further configured to, in response to being controlled by the processor (14) based on the sensor output, generate one or more supplementary projections for guiding user attention to the at least one sensory projection (15) associated with the object (17) of interest.

14. A method (30) for human-machine interaction, the method (30) comprising:
using (31) one or more sensors (13) to sense an environment of a robotic body (11) and to detect an object (17) of interest, with which the robotic body (11) interacts or intends to interact, in the environment;
controlling (32) a functional skin-like device (12) attached to the robotic body (11) based on a sensor output of the one or more sensors (13);
wherein the skin-like device generates (33) at least one sensory projection (15) associated with the object (17) of interest in response to the controlling; and
wherein the at least one sensory projection (15) is generated (33) on or by one or more parts of the skin-like device (12) attached to respective one or more parts (16) of the robotic body (11) that interact with or intend to interact with the object (17) of interest.

15. A computer program comprising instructions which, when the computer program is executed by a processor, causes the processor to perform the method of claim 14.
